# EUROPEAN PATENT APPLICATION

(11) **EP 4 553 129 A1**
(43) Date of publication of application: **14.05.2025**
(21) Application number: 23306937.6
(22) Date of filing: 09.11.2023
(51) Int. Cl.: C09K 8/36, C09K 23/00

(54) **EMULSIFIER COMBINATION TO ENHANCE STABILITY OF INVERT EMULSION DRILLING MUDS**

(71) Applicant: Oleon N.V., 9940 Ertvelde (BE)
(72) Inventor: CHIA, Chee-Hung, Houston, TX 77025 (US); DELIGNY, Julien, 60280 Venette (FR)
(74) Representative: Santarelli

(57) **Abstract**

The present invention relates to a combination and its use as secondary emulsifier to improve the rheology properties, in particular the stability and the yield point of invert emulsion drilling muds.

## Description

The present invention relates to a combination and its use as a secondary emulsifier, and to an invert emulsion drilling mud comprising it. In particular, the combination improve the stability and/or the yield point of invert emulsion drilling muds for drilling operations of wellbores in subterranean formations.

A drilling operation of subterranean oil and gas well requires the use of a drilling mud (also known as drilling fluid) for multiple purposes. As described in publications Composition and Properties of Drilling and Completion Fluids, Ryen Caenn, H.C.H. Darley and George R. Gray, 2012, and Petroleum Engineer's Guide to Oil Field Chemicals and Fluids, Johannes Karl Fink, 2017), the main roles of a drilling fluids are:
- to maintain the hydrostatic pressure throughout the fluid column to prevent blowout to the surface and to keep the integrity of the uncased wellbore walls;
- to protect drillstring and casing from corrosion;
- to cool and lubricate bit and drillstring;
- to transport cuttings and cavings to surface.

Drilling muds are typically generalized into two categories, water based muds (WBM) and oil based muds (OBM).

An invert emulsion drilling mud can be defined as an oil based mud to which water in added to form a water-in-oil drilling mud.

Invert emulsion drilling muds are often chosen for their high performance, such as high thermal stability, good shale inhibition, and better reusability compared to water based drilling muds. They are typically preferred for deep water and extended reach wells because of the lubricity and wellbore stability provided.

To form a stable dispersion of water droplets in the oil phase, and to maintain any solids or drill cuttings in an oil-wet state, at least one emulsifier is required. The emulsifier(s) may be a "primary emulsifier", either used alone or in combination with a "secondary emulsifier".

Various primary emulsifiers are known in the art as useful for invert emulsion drilling muds which use crude oil or its fractions as a base. These primary emulsifiers include fatty acid mixtures, which function after their conversion to soaps, and therefore require the presence of sufficient alkaline earth metal ions to form the soaps.

Secondary emulsifiers, which assist in maintaining phase stability at high temperatures and in the presence of brines, include materials such as polyamides.

With the increasing importance of environmental concerns in the industry, ecotoxicity and biodegradability prevail the choice of emulsifiers and additives used in drilling muds.

The present invention is a combination of emulsifiers; each of them is biodegradable and meets all ecotoxicity requirements. The components of the combination originate from sources that are fully renewable. This work will propose a blend of known emulsifiers to utilize the advantages of each components with synergistic effects.

The work of the inventors has indeed shown that a particular combination of emulsifiers produces synergistic effects.

In particular, the combination according to the invention provides better stability and good rheology properties to invert emulsion muds.

More particularly, the combination according to the invention enhances the electrical stability and/or the yield point of an invert emulsion drilling mud comprising the said combination.

The electrical stability characterized the stability of an invert emulsion drilling mud. The higher the electrical stability, the better the stability.

The yield point is the measure of the fluid's initial flow resistance. It represents the capability of a drilling mud to raise shale cuttings out of a wellbore under dynamic conditions. The greater the yield point, the better the carrying capacity.

Advantageously, the invert emulsion drilling mud comprising the combination according to the invention present one, more advantageously all of the following characteristics:
- an electrical stability of at least 900, preferably of at least 1000 V measured at 65°C (150°F) before and after aging at 121°C (250°F);
- a yield point of at least 8 lb/100 ft (pounds per 100 square feet) measured at 65°C (150°F) before and after aging at 121°C (250°F).

By "aging", it is intended to mean that the invert emulsion drilling mud was hot rolled at 121°C (250°F) for 16 hours at 1.034×10⁶ Pa (150 psi).

The present invention relates thus to a combination comprising:
- 5-45 wt% of a sorbitan ester selected from the group consisting of sorbitan monooleate, sorbitan monolaurate, ethoxylated derivatives thereof, and mixtures thereof;
- 5-45 wt% of phospholipid(s); and
- 5-45 wt% of fatty acid(s); weight percentages being based on the weight of the combination.

In the present application, unless otherwise indicated, all ranges of values used are to be understood as being inclusive limits.

Phospholipid(s) is/are preferably glycerophospholipids and/or sphingophospholipids.

Glycerophospholipids are composed of a glycerol backbone esterified with one or two fatty acid(s) and a phosphate group, eventually linked to different types of substitutes such as choline, ethanolamine, inositol, serine or glycerol.

Thus, glycerophospholipids are phosphatidylcholines, phosphatidylethanolamines, phosphatidylinositols, phosphatidylserines, phosphatidylglycerols and/or phosphatidic acids.

Sphingophospholipids are composed of a ceramide linked to a phosphoric acid and an amino alcohol, such as an ethanolamine or a choline, preferably a choline to form a sphingomyelin. In particular, sphingophospholipids are sphingomyelins.

More particularly, phospholipid(s) is/are selected from the group consisting of phosphatidylcholines, phosphatidylethanolamines, phosphatidyl-inositols, phosphatidylserines, phosphatidylglycerols, phosphatidic acids, sphingomyelins and mixtures thereof.

Preferably, the combination comprises a mixture of phospholipids.

In the combination according to the invention, phospholipid(s) may be introduced via a lecithin.

Lecithin is a generic term that is used to describe a multi-component blend containing phospholipids, triglycerides, glycolipids and optionally sterol(s).

Lecithin can be obtained from plant, in particular from seeds, and from animal, in particular from egg yolk or from milk.

Preferably, in the combination according to the invention, phospholipids are introduces via a lecithin obtained from plants or animals. In particular, the lecithin may be obtained from soybeans, sunflower, canola, corn, or egg yolks.

Generally, the lecithin obtained from a plant comprises from 40 to 60% by weight of phospholipids and from 30 to 50% by weight of vegetable oil based on the weight of the lecithin.

The lecithin may be deoiled, so the content of phospholipids can reach up to 90% by weight of lecithin.

The fatty acid(s) are advantageously obtained from a renewable oil, in particular a vegetable oil.

More particularly, fatty acids are obtained from rapeseed oil, sunflower oil, soybean oil, corn oil or olive oil.

Preferably, the fatty acid(s) is selected from the group consisting of isostearic acid, oleic acid, linoleic acid, linolenic acid, and mixtures thereof.

The fatty acid(s) also includes oligomers of fatty acid(s) that have been subjected to an isomerization reaction. Thus, oligomers of fatty acids are dimers, trimers and/or tetramers of fatty acid(s). In particular, the fatty acids is preferably dimers, trimers and/or tetramers of oleic acid.

The sorbitan ester is preferably sorbitan monooleate or sorbitan monolaurate, more preferably sorbitan monooleate.

Advantageously, in the combination according to the invention, the quantity of sorbitan ester is comprised between 10 and 45% by weight based on the weight of the combination.

Preferably, the quantity of sorbitan ester is preferably comprised between 15 and 45 wt%, more preferably between 15 at 40 wt% based on the weight of the combination.

Advantageously, in the combination according to the invention, the quantity of phospholipid(s) is comprised between 10 and 45% by weight based on the weight of the combination.

Preferably, the quantity of surfactant is preferably comprised between 10 and 40 wt% based on the weight of the combination.

Advantageously, in the combination according to the invention, the quantity of fatty acid(s) is comprised between 10 and 45% by weight based on the weight of the combination.

Preferably, the quantity of fatty acid(s) is preferably comprised between 15 and 45 wt%, more preferably between 15 at 40 wt% based on the weight of the combination.

A preferred combination according to the invention comprises:
- 10-45 wt% of a sorbitan ester selected from the group consisting of sorbitan monooleate, sorbitan monolaurate, ethoxylated sorbitan monolaurate, ethoxylated sorbitan monooleate and mixtures thereof;
- 10-45 wt% of phospholipid(s); and
- 10-45 wt% of fatty acid(s);
weight percentages being based on the weight of the combination.

A particularly preferred combination according to the invention comprises:
- 15-40 wt% of a sorbitan ester selected from the group consisting of sorbitan monooleate, sorbitan monolaurate, ethoxylated sorbitan monolaurate, ethoxylated sorbitan monooleate and mixtures thereof;
- 10-40 wt% of phospholipid(s); and
- 15-40 wt% of fatty acid(s);
weight percentages being based on the weight of the combination.

The present invention also relates to an use of the combination according to the invention, as a secondary emulsifier.

In particular, the secondary emulsifier is used in an invert emulsion drilling mud, for drilling operations of wellbores in subterranean formations.

The present invention also relates to an invert emulsion drilling mud comprising:
- an oily liquid;
- brine;
- a clay;
- a primary emulsifier; and
- the combination according to the invention.

The oily liquid may be a natural or synthetic oil. More particularly, the oily liquid may be a mineral oil such as diesel, polyalphaolefins, siloxanes, organosiloxanes, fatty acid esters and mixtures thereof.

Preferably, in the invert emulsion drilling mud, the quantity of the oily liquid is of at least 285 kg /m³ (100 ppb), more preferably of at least 427.5 kg/m³ (150 ppb).

"Ppb" is the abbreviation for the US oilfield unit of concentration, and stands for "pounds-per-barrel".

The brine is a solution of mineral salt(s) in water.

The mineral salt(s) is preferably potassium chloride, calcium chloride, sodium chloride, magnesium chloride, sodium sulfate, sodium bicarbonate, potassium bromide, strontium chloride, sodium fluoride and/or sodium bromide.

Preferably, the quantity of the mineral salt is comprised between 1 and 40 wt% based on the weight of the brine.

Preferably, the quantity of water is comprised between 60 and 99 wt% based on the weight of the brine.

Preferably, in the invert emulsion drilling mud, the quantity of the brine is of at least 156.7 kg/m³ (55 ppb), more preferably, at least 171 kg/m³ (60 ppb).

Advantageously, in the invert emulsion drilling mud according to the invention, the volume ratio oily liquid/brine is comprised between 60/40 and 90/10.

Preferably, the volume ratio oily liquid/brine is comprised between 70/30 and 85/15, such as 80/20.

The clay is preferably an organophilic clay such as bentonite, hectorite, attapulgite, sepiolite.

Preferably, the quantity of clay is comprised between 1.4 and 42.8 kg/m³ (0.5 and 15 ppb), more preferably between 4.2 and 28.5 kg/m³ (1.5 and 10 ppb).

The primary emulsifier may be fatty acids, amidoamines, polyamides, polyamines, imidazoline derivatives or alcohol derivatives and combinations or derivatives of the above.

Preferably, the primary emulsifier is fatty acids.

Preferably, in the invert emulsion drilling mud, the quantity of the primary emulsifier is comprised between 2.85 and 28.5 kg/m³ (1 and 10 ppb), more preferably between 5.7 and 28.5 kg/m³ (2 and 10 ppb).

Advantageously, in the invert emulsion drilling mud according to the invention, the quantity of the combination is of at least 1.4 kg/m³ (0.5 ppb).

Preferably, the quantity of the combination is of at least 2.85 kg/m³ (1 ppb), more preferably of at least 4.2 kg/m³ (1.5 ppb), even more preferably of at least 5.7 kg/m³ (2 ppb), such as 7.1 kg/m³ (2.5 ppb).

Preferably, the quantity of the combination is of at most 28.5 kg/m³ (10 ppb), more preferably of at most 22.8 kg/m³ (8 ppb), even more preferably of at most 17.1 kg/m³ (6 ppb).

Preferably, the quantity of combination is comprised between 1.4 and 28.5 kg/m³ (0.5 and 10 ppb), more preferably between 4.2 and 22.8 kg/m³ (1.5 and 8 ppb), even more preferably between 5.7 and 17.1 kg/m³ (2 and 6 ppb).

A preferred invert emulsion drilling mud according to the invention comprises:
- at least 285 kg/m³ (100 ppb) of an oily liquid;
- at least 156.7 kg/m³ (55 ppb) of brine;
- 1.4 and 42.8 kg/m³ (0.5-15 ppb) of a clay;
- 2.85 and 28.5 kg/m³ (1-10 ppb) of a primary emulsifier; and
- 1.4 and 28.5 kg/m³ (0.5-10 ppb) of the combination according to the invention;
wherein the volume ratio oily liquid/brine is comprised between 60/40 and 90/10.

A particularly preferred invert emulsion drilling mud according to the invention comprises:
- at least 427.5 kg/m³ (150 ppb) of an oily liquid;
- at least 171 kg/m³ (60 ppb) of brine;
- 4.2 and 28.5 kg/m³ (1.5 and 10 ppb) of a clay;
- 5.7 and 28.5 kg/m³ (2 and 10 ppb) of a primary emulsifier; and
- 4.2 and 22.8 kg/m³ (1.5 and 8 ppb) of the combination according to the invention;
wherein the volume ratio oily liquid/brine is comprised between 70/30 and 80/20.

The invert emulsion drilling mud may further comprise a weighting agent such as barite, a pH adjusting agent such as lime, and/or filtration control agent such as gilsonite.

The present invention also relates to an use of the invert emulsion drilling mud according to the invention, in a wellbore.

The present invention also concerns a method for improving the stability of an invert emulsion drilling mud comprising an oily liquid, a brine, a clay and a primary emulsifier, by adding the combination according to the invention, into the said invert emulsion drilling mud.

As shown by Example 3, the addition of the combination according to the invention in an invert emulsion drilling mud improves significantly the stability of said mud, before and even after the said mud has been hot rolled at 121°C (250°F). Indeed, the electrical stability is of at least 600 V at 65°C (150°F) before and after the said mud has been hot rolled at 121°C (250°F).

The present invention also concerns a method for improving the yield point of an invert emulsion drilling mud comprising an oily liquid, a brine, a clay and a primary emulsifier, by adding the combination according to the invention, into the said invert emulsion drilling mud.

As shown by Example 3, the addition of the combination according to the invention in an invert emulsion drilling mud improves the carrying capacity of cuttings of said mud, before and even after the said mud has been hot rolled at 121°C (250°F). Indeed, the yield point is of at least 8 lb/100 ft at 65°C before and after the said mud has been hot rolled at 121°C (250°F).

Preferably, the addition of the combination according to the invention in an invert emulsion drilling mud improves the electrical stability and the yield point of the said mud at 65°C (150°F) before and after the said mud has been hot rolled at 121°C (250°F).

In the methods according to the invention, the oily liquid, the brine, the clay and the primary emulsifier are as described above, including preferential and advantageous positions.

The present invention is further described in the following examples. It will be appreciated that the invention as claimed is not intended to be limited in any way by these examples.

### Example 1: Preparation of combinations

### 1. Preparation of the combination C1 according to the invention

The combination C1 is obtained by mixing together 33 wt% of sorbitan monooleate (Radia 7155 from Oleon), 33 wt% of soybean lecithin (Radia 4490 from Oleon comprising 33-38 wt% of soybean oil and 40-50 wt% of phospholipids), 34 wt% of fatty acid oligomers (Well.O 8828 from Oleon).

### 2. Preparation of the comparative combinations

The comparative combinations were obtained according to method described in Example 1.1 using same chemicals and quantities as described in Table 1 below.

**Table 1: Comparative combination CC1-CC3**

| | Comparative combination CC1 (wt%) | Comparative combination CC2 (wt%) | Comparative combination CC3 (wt %) |
|---|---|---|---|
| Sorbitan monololeate | | 50 | 50 |
| Soybean lecithin | 50 | | 50 |
| Fatty acid oligomers | 50 | 50 | |

### Example 2: Preparation of invert emulsion drilling muds

### 1. Preparation of invert emulsion drilling muds

Invert emulsion drilling mud according to the invention M1, and comparative invert emulsion drilling muds CM1-CM6 were prepared by mixing under mechanical high shear rate stirring at room temperature until homogeneous, materials described in Tables 2 and 3 below.

For all invert emulsion drilling muds, the mud density represents 11.5 ppg.

For all invert emulsion drilling muds, the volume ratio oil phase/aqueous phase is of 80/20.

**Table 2: Content in kg/m³ (and in ppb in brackets) of invert emulsion drilling muds according to the invention M1 and of comparative invert emulsion drilling muds CM1-CM3**

| Materials | Function | Invert emulsion drilling muds | | | |
|---|---|---|---|---|---|
| | | M1 | CM1 | CM2 | CM3 |
| Diesel | oil phase | 501.05 (175.81) | 501.05 (175.81) | 501.05 (175.81) | 501.05 (175.81) |
| 25% CaCl₂ brine | aqueous phase | 196.28 (68.87) | 196.28 (68.87) | 196.28 (68.87) | 196.28 (68.87) |
| Organo-clay (Bentone 910 from Elementis) | viscosifying agent | 8.55 (3) | 8.55 (3) | 8.55 (3) | 8.55 (3) |
| Organo-clay (Bentone 150 from Elementis) | viscosifying agent | 8.55 (3) | 8.55 (3) | 8.55 (3) | 8.55 (3) |
| Barite | weighting agent | 614.20 (215.51) | 614.20 (215.51) | 614.20 (215.51) | 614.20 (215.51) |
| Lime | pH adjusting agent | 28.5 (10) | 28.5 (10) | 28.5 (10) | 28.5 (10) |
| Tall oil fatty acids (Resinoline BD 2 from DRT) | primary emulsifier | 14.25 (5) | 14.25 (5) | 14.25 (5) | 14.25 (5) |
| Combination C1 according to the invention | secondary emulsifier | 7.12 (2.5) | | | |
| Sorbitan monololeate | secondary emulsifier | | 7.12 (2.5) | | |
| Soybean lecithin | secondary emulsifier | | | 7.12 (2.5) | |
| Fatty acid oligomers | secondary emulsifier | | | | 7.12 (2.5) |

**Table 3: Content in kg/m³ (and in ppb in brackets) of comparative invert emulsion drilling muds CM4-CM6**

| Materials | Function | Invert emulsion drilling muds | | | |
|---|---|---|---|---|---|
| | | CM4 | CM5 | CM6 | CM7 |
| Diesel | oil phase | 501.05 (175.81) | 501.05 (175.81) | 501.05 (175.81) | 501.05 (175.81) |
| 25% CaCl₂ brine | aqueous phase | 196.28 (68.87) | 196.28 (68.87) | 196.28 (68.87) | 196.28 (68.87) |
| Organo-clay (Bentone 910 from Elementis) | viscosifying agent | 8.55 (3) | 8.55 (3) | 8.55 (3) | 8.55 (3) |
| Organo-clay (Bentone 150 from Elementis) | viscosifying agent | 8.55 (3) | 8.55 (3) | 8.55 (3) | 8.55 (3) |
| Barite | weighting agent | 614.20 (215.51) | 614.20 (215.51) | 614.20 (215.51) | 614.20 (215.51) |
| Lime | pH adjusting agent | 28.5 (10) | 28.5 (10) | 28.5 (10) | 28.5 (10) |
| Tall oil fatty acids (Resinoline BD 2 from DRT) | primary emulsifier | 14.25 (5) | 14.25 (5) | 14.25 (5) | 14.25 (5) |
| Comparative combination CC1 | secondary emulsifier | 7.12 (2.5) | | | |
| Comparative combination CC2 | secondary emulsifier | | 7.12 (2.5) | | |
| Comparative combination CC3 | secondary emulsifier | | | 7.12 (2.5) | |

Bentone 910 and Bentone 150 are organophilic clay materials, used as viscosifying agents.

It is conventional in invert emulsion drilling muds to include an alkali reserve so that the overall mud formulation is basic. Typically this is in the form of lime or alternatively mixtures of alkali and alkaline earth oxides and hydroxides.

### Example 3: Evaluation of the properties of invert emulsion drilling muds

The rheology properties of invert emulsion drilling muds were evaluated in accordance with the procedures recommended by the American Petroleum Institute in API Recommended Practice 13B-2, 1990, at two different aging conditions: Before Hot Rolling (BHR) at 65°C (150°F) and After Hot Rolling (AHR) at 121°C (250°F).

Results are indicated in Tables 3 and 4 below.

| | invert emulsion drilling muds | | | | | | | |
|---|---|---|---|---|---|---|---|---|
| | **M1** | | **CM1** | | **CM2** | | **CM3** | |
| | BHR | AHR | BHR | AHR | BHR | AHR | BHR | AHR |
| 600 rpm reading | 74 | 48 | 26 | 27 | 34 | 31 | 74 | 50 |
| 300 rpm reading | 51 | 28 | 15 | 14 | 17 | 16 | 49 | 28 |
| 200 rpm reading | 41 | 19 | 11 | 9 | 11 | 10 | 38 | 20 |
| 100 rpm reading | 30 | 13 | 7 | 5 | 6 | 6 | 27 | 13 |
| 6 rpm reading | 13 | 7 | 1 | 1 | 1 | 2 | 10 | 8 |
| 3 rpm reading | 11 | 7 | 1 | 1 | 1 | 3 | 9 | 9 |
| PV (cP) | 23 | 20 | 11 | 13 | 17 | 15 | 25 | 22 |
| YP (Ib/100 ft) | 28 | 8 | 4 | 1 | 0 | 1 | 24 | 6 |
| 10" Gel (lbs/100 ft²) | 11 | 7 | 1 | 1 | 1 | 1 | 8 | 8 |
| 10' Gel (lbs/100 ft²) | 11 | 9 | 1 | 1 | 1 | 1 | 9 | 12 |
| Electrical stability (V) | 1253 | 1117 | 429 | 464 | 347 | 575 | 1132 | 823 |

Table 3: Rheology properties at 65.5°C (150°F) before and after aging of M1 and CM1-CM3

**Table 4: Rheology properties at 65.5°C (150°F) before and after aging of CM4-CM7**

| | invert emulsion drilling muds | | | | | | | |
|---|---|---|---|---|---|---|---|---|
| | **CM4** | | **CM5** | | **CM6** | | **CM7** | |
| | BHR | AHR | BHR | AHR | BHR | AHR | BHR | AHR |
| 600 rpm reading | 67 | 44 | 57 | 88 | 26 | 26 | 43 | 30 |
| 300 rpm reading | 44 | 24 | 36 | 55 | 14 | 14 | 29 | 18 |
| 200 rpm reading | 34 | 17 | 28 | 42 | 10 | 10 | 23 | 14 |
| 100 rpm reading | 23 | 11 | 19 | 28 | 6 | 6 | 18 | 9 |
| 6 rpm reading | 7 | 6 | 6 | 9 | 1 | 1 | 9 | 4 |
| 3 rpm reading | 6 | 6 | 5 | 7 | 1 | 1 | 9 | 3 |
| PV (cP) | 23 | 20 | 21 | 33 | 12 | 12 | 9 | 4 |
| YP (Ib/100 ft) | 21 | 4 | 15 | 22 | 2 | 2 | 9 | 4 |
| 10" Gel (lbs/100 ft²) | 6 | 5 | 5 | 7 | 1 | 1 | 14 | 12 |
| 10' Gel (lbs/100 ft²) | 6 | 10 | 8 | 11 | 1 | 1 | 15 | 6 |
| Electrical stability (V) | 1121 | 948 | 932 | 595 | 524 | 858 | 899 | 568 |

The invert emulsion drilling mud according to the invention M1 presents outstanding electrical stability values of more than 1000 V at 65°C (150°F) before (BHR) and after (AHR) aging.

This indicates that the invert emulsion drilling mud of the invention is particularly stable even after aging at high temperature, such as at 121°C (250°F).

It can also be observed that only M1 present such a high electrical stability at both before and after hot rolling. Indeed, while the use of sorbitan fatty ester or lecithin as secondary emulsifier in comparative invert emulsion drilling fluids (CM1 and CM2) decreases the electrical stability compared to an invert emulsion drilling fluid without secondary emulsifier (CM7), the use fatty acids as secondary emulsifier increased the yield points (CM3). But fatty acids does not improve the yield point after hot rolling (value remains at 6 lb/100 ft at 65°C.

However, only the combination of the three chemicals, sorbitan fatty ester, lecithin and fatty acids, enables the obtention of electrical stability higher than 1000 V at 65°C before and after hot rolling. This demonstrates a synergetic effect these tree compounds.

The invert emulsion drilling mud according to the invention M1 presents also high yields points, of at least 8 Ib/100 ft at 65°C before and after aging, in particular higher than the yield points of the comparative invert emulsion drilling mud without secondary emulsifier (CM7).

This indicates that the invert emulsion drilling mud according to the invention has an improved carrying capacity of cuttings.

On the contrary, comparative invert emulsion drilling muds comprising only one of the chemicals of the combination according to the invention as secondary emulsifier (CM1-CM3), do not have a yield point of at least 8 before and after aging.

Moreover, by comparing CM1-CM3 with CM7 which does not contain any secondary emulsifier, only addition of fatty acids as secondary emulsifier (CM3) increases the yield point, but only before the aging (AHR) of the invert emulsion drilling mud.

By combining fatty acids with lecithin (CC1) or with sorbitan monooleate (CC2) and using them as secondary emulsifier, the yield points of the respective invert emulsion drilling muds (CM4 and CM5) before aging are increased, compared to the yield points without secondary emulsifier (CM7).

The yield points after aging (AHR values) of comparative invert emulsion drilling muds are all lower than the yield point of the invert emulsion drilling mud according to the invention, except for CM5, but with the latter, the electrical stability remain lower than 600 V after aging.

Only the invert emulsion drilling mud according to the invention M1 presents an electrical stability of at least 600 V measured at 65°C (150°F) before and after aging at 121°C (250°F), and a yield point of at least 8 lb/100 ft measured at 65°C (150°F) before and after aging at 121°C (250°F).

This demonstrates that there is a synergetic effect between the chemicals of the combination according to the invention. Indeed, only the combination of the three chemicals, sorbitan fatty ester, lecithin and fatty acids, enables the increase of the yield point before and after hot rolling.

## Claims

1. Combination comprising :
- 5-45 wt% of a sorbitan ester selected from the group consisting of sorbitan monooleate, sorbitan monolaurate, ethoxylated derivatives thereof, and mixtures thereof;
- 5-45 wt% of phospholipid(s); and
- 5-45 wt% of fatty acid(s);
weight percentages being based on the weight of the combination.

2. Combination according to claim 1, wherein the quantity of sorbitan ester is comprised between 10 and 45% by weight based on the weight of the combination.

3. Combination according to claim 1 or 2, wherein the quantity of phospholipid(s) is comprised between 10 and 45% by weight based on the weight of the combination.

4. Combination according to any of claims 1 to 3, wherein the quantity of fatty acid(s) is comprised between 10 and 45% by weight based on the weight of the combination.

5. Use of the combination according to any of claims 1 to 4, as a secondary emulsifier.

6. Invert emulsion drilling mud comprising:
- an oily liquid;
- brine;
- a clay;
- a primary emulsifier; and
- the combination according to any of claims 1 to 4.

7. Invert emulsion drilling mud according to claim 6, wherein the volume ratio oily liquid/brine is comprised between 60/40 and 90/10.

8. Invert emulsion drilling mud according to claim 6 or 7, wherein the quantity of the combination is of at least 1.4 kg/m³ (0.5 ppb).

9. Use of the invert emulsion drilling mud according to any of claims 6 to 8, in a wellbore.

10. Method for improving the stability of an invert emulsion drilling mud comprising an oily liquid, a brine, a clay and a primary emulsifier, by adding the combination according to any of claims 1 to 4, into the said invert emulsion drilling mud.

11. Method for improving the yield point of an invert emulsion drilling mud comprising an oily liquid, a brine, a clay and a primary emulsifier, by adding the combination according to any of claims 1 to 4, into the said invert emulsion drilling mud.
